# EUROPÄISCHE PATENTSCHRIFT

(11) **EP 4 126 606 B1**
(45) Veröffentlichungstag und Bekanntmachung des Hinweises auf die Patenterteilung: **23.10.2024**
(21) Anmeldenummer: 21709368.1
(22) Anmeldetag: 01.03.2021
(51) Int. Cl.: B60S 3/06, B60S 3/00, B60S 3/04

(54) **REINIGUNGSVORRICHTUNG UND VERFAHREN ZUM REINIGEN EINES SCHIENENFAHRZEUGS**
CLEANING DEVICE AND METHOD FOR CLEANING A RAILWAY VEHICLE
DISPOSITIF DE NETTOYAGE ET PROCÉDÉ POUR NETTOYER UN VÉHICULE FERROVIAIRE

(30) Priorität: 23.03.2020 DE 102020203719
(43) Veröffentlichungstag der Anmeldung: 08.02.2023
(73) Patentinhaber: Robel Bahnbaumaschinen GmbH, 83395 Freilassing (DE)
(72) Erfinder: PFINGSTL, Andreas, 83395 Freilassing (DE); SENDLHOFER, Gerhard, 5431 Kuchl (AT); EISELE, Philipp, 5200 Hallwang (AT); FLATSCHER, Josef, 83416 Saaldorf-Surheim (DE); SCHMID, Gregor, 83404 Ainring (DE); KNOTT, Martin, verstorben (DE)
(74) Vertreter: Rau, Schneck & Hübner Patentanwälte Rechtsanwälte PartGmbB
(86) Internationale Anmeldenummer: PCT/EP2021/054966
(87) Internationale Veröffentlichungsnummer: WO 2021/190860

(56) Entgegenhaltungen:
- EP-A1- 3 159 228
- EP-A1- 3 670 276
- WO-A1-2020/126371
- WO-A1-2020/126830
- WO-A1-2020/239398
- CN-A- 108 860 071
- CN-A- 109 987 061
- CN-A- 110 194 128
- CN-A- 110 194 128
- DE-A1- 102014 112 123
- DE-U1- 202017 004 032
- US-A1- 2002 121 291

## Beschreibung

Der Inhalt der deutschen Patentanmeldung DE 10 2020 203 719.1 wird durch Bezugnahme hierin aufgenommen.

Die Erfindung betrifft eine Reinigungsvorrichtung und ein Verfahren zum Reinigen eines Schienenfahrzeugs.

Schienenfahrzeuge werden regelmäßig von Sprayern durch das Aufbringen von Sprühlack bzw. Graffities beschädigt. Im Extremfall kann es zu Verbindungsausfällen kommen, wenn die Fenster des Schienenfahrzeugs im Bereich des Führerstands verschmutzt sind und das Schienenfahrzeug hierdurch nicht einsatzbereit ist.

Aus der CN 110 194 128 A ist eine Reinigungsstation zur Reinigung von Schienenfahrzeugen bekannt. Die Reinigungsstation umfasst Traggestelle, die beidseitig eines Fahrweges angeordnet sind und auf Führungsschienen verfahrbar sind. An den Traggestellen sind eine Vielzahl von Mehrachs-Roboterarmen übereinander und hintereinander angeordnet. Die Reinigungsstation umfasst ferner visuelle Erkennungsinstrumente. Zur Reinigung eines Schienenfahrzeugs wird mittels der visuellen Erkennungsinstrumente das Erscheinungsbild des Schienenahrzeugs erkannt sowie ein Verschmutzungszustand festgestellt. Ausgehend hiervon wird ein in einem Steuersystem vordefiniertes Reinigungsprogramm gestartet und die Reinigungsintensität eingestellt. Die Vielzahl der Mehrachs-Roboterarme führen anschließend eine Reinigung des Schienenfahrzeugs durch. Das Reinigungsergebnis wird mittels der visuellen Erkennungsinstrumente überwacht und erforderlichenfalls eine Nachreinigung durchgeführt.

Aus der CN 108 860 071 A ist eine Reinigungsvorrichtung für Drehgestelle bekannt. Die Reinigungsvorrichtung umfasst eine Trockeneisstrahleinrichtung.

Aus der DE 20 2017 004 032 U1 ist eine Waschvorrichtung für Straßenfahrzeuge bekannt. Die Waschvorrichtung umfasst Delta-Roboter, die jeweils an einem Gestell höhenbeweglich angeordnet sind.

Aus der EP 3 159 228 A1 ist eine Reinigungseinrichtung für Schienenfahrzeuge bekannt. Die Reinigungseinrichtung umfasst beidseitig eines Gleises angeordnete Säulen, an denen Luftausströmöffnungen zum Ausströmen von Druckluft angeordnet sind.

Der Erfindung liegt die Aufgabe zugrunde, eine Reinigungsvorrichtung zu schaffen, die eine einfache, schnelle und zuverlässige automatische Reinigung eines Schienenfahrzeugs ermöglicht.

Diese Aufgabe wird durch eine Reinigungsvorrichtung mit den Merkmalen des Anspruchs 1 gelöst. Mittels der mindestens einen Detektionseinrichtung werden Verschmutzungen an dem zu reinigenden Schienenfahrzeug detektiert. Die mindestens eine Detektionseinrichtung umfasst vorzugsweise jeweils mindestens einen Lichtsensor bzw. optischen Detektor. Die mindestens eine Detektionseinrichtung ist in Signalverbindung mit der Steuereinrichtung. Die Steuereinrichtung erstellt anhand der detektierten Verschmutzungen mindestens ein Reinigungsprogramm zum Steuern der mindestens einen Reinigungseinrichtung. Die Steuereinrichtung steuert die mindestens eine Reinigungseinrichtung in Abhängigkeit der detektierten Verschmutzungen. Zum Reinigen des Schienenfahrzeugs steuert die Steuereinrichtung insbesondere den mindestens einen Mehrachsroboter. Der mindestens eine Mehrachsroboter hält das mindestens eine zugehörige Reinigungselement und positioniert dieses relativ zu dem Schienenfahrzeug derart, dass die detektierten Verschmutzungen entfernt werden. Das Detektieren der Verschmutzungen an dem zu reinigenden Schienenfahrzeug und das anschließende Reinigen des Schienenfahrzeugs bzw. das Entfernen der Verschmutzungen erfolgt automatisch. Die Reinigungsvorrichtung ermöglicht somit ein einfaches, schnelles und zuverlässiges Reinigen des Schienenfahrzeugs. Das Schienenfahrzeug ist beispielsweise ein Nahverkehrszug und/oder ein Fernverkehrszug.

Die Fahrbewegungssteuereinrichtung ermöglicht insbesondere ein teilautomatisiertes und/oder vollautomatisiertes Steuern der Fahrbewegung des zu reinigenden Schienenfahrzeugs.

Zum teilautomatisierten Steuern umfasst die Fahrbewegungssteuereinrichtung mindestens ein optisches und/oder akustisches Steuerelement. Das Steuerelement dient zum Informieren eines Fahrers des zu reinigenden Schienenfahrzeugs. Der Fahrer erhält mittels des mindestens einen Steuerelements insbesondere Informationen darüber, ob und/oder mit welcher Geschwindigkeit und/oder in welcher Fahrtrichtung der Fahrer das zu reinigende Schienenfahrzeug zu bewegen hat. Vorzugsweise umfasst das mindestens eine Steuerelement eine optische Anzeige für den Fahrer. Vorzugsweise sind mehrere optische Anzeigen vorgesehen, die entlang einer Prozessrichtung angeordnet sind.

Zum vollautomatisierten Steuern umfasst die Fahrbewegungssteuereinrichtung einen Sender und/oder einen Empfänger zum Senden und/oder Empfangen von Steuersignalen zum Steuern der Fahrbewegung. Die Fahrbewegungssteuereinrichtung ist in Signalverbindung mit einer Fahrzeugsteuereinrichtung, so dass die Fahrbewegung des zu reinigenden Schienenfahrzeugs durch die Fahrbewegungssteuereinrichtung vorgegeben wird. Ein Fahrer ist während der Reinigung des Schienenfahrzeugs nicht erforderlich.

Eine Reinigungsvorrichtung nach Anspruch 2 gewährleistet eine einfache, schnelle und zuverlässige automatische Reinigung. Die mindestens eine Überprüfungseinrichtung überprüft das gereinigte Schienenfahrzeug bzw. das Reinigungsergebnis. Das Reinigungsergebnis wird insbesondere mittels der mindestens einen Überprüfungseinrichtung dokumentiert. Die mindestens eine Überprüfungseinrichtung umfasst vorzugsweise jeweils mindestens einen Lichtsensor bzw. einen optischen Detektor. Die mindestens eine Überprüfungseinrichtung ist vorzugsweise in Signalverbindung mit der Steuereinrichtung. Ist das Reinigungsergebnis nicht akzeptabel, so erstellt die Steuereinrichtung insbesondere ein Nachreinigungsprogramm. Mittels des Nachreinigungsprogramms steuert die Steuereinrichtung die mindestens eine Reinigungseinrichtung zum Nachreinigen des Schienenfahrzeugs an. Die Steuereinrichtung steuert die mindestens eine Reinigungseinrichtung beispielsweise derart an, dass der mindestens eine Mehrachsroboter ein im Vergleich zu der ersten Reinigung abweichendes Reinigungselement hält und so positioniert, dass die restlichen Verschmutzungen entfernt werden. Vorzugsweise erfolgen das Reinigen und das Nachreinigen mittels unterschiedlicher Reinigungsparameter und/oder unterschiedlicher Reinigungselemente, beispielsweise mittels einer Bürste und einer Düse.

Eine Reinigungsvorrichtung nach Anspruch 3 gewährleistet eine einfache, schnelle und zuverlässige automatische Reinigung. Mittels der jeweiligen Digitalkamera werden digitale Bilddaten des zu reinigenden bzw. des gereinigten Schienenfahrzeugs ermittelt. Die digitalen Bilddaten werden beispielsweise zur Erstellung eines Reinigungsprogramms bzw. zur Erstellung eines Nachreinigungsprogramms von der Steuereinrichtung ausgewertet.

Bei einem ersten Ausführungsbeispiel umfasst die mindestens eine Detektionseinrichtung und/oder die mindestens eine Überprüfungseinrichtung jeweils einen Träger, an dem mindestens eine Digitalkamera, insbesondere mindestens zwei Digitalkameras, angeordnet sind. Die mindestens zwei Digitalkameras sind vorzugsweise fest an dem Träger angeordnet und/oder insbesondere in einer vertikalen Richtung zueinander beabstandet. Hierdurch wird gewährleistet, dass die mindestens zwei Digitalkameras in der gesamten Höhe eine Seitenwand des Schienenfahrzeugs erfassen.

Bei einem zweiten Ausführungsbeispiel umfasst die mindestens eine Detektionseinrichtung und/oder die mindestens eine Überprüfungseinrichtung jeweils einen Träger, an dem mindestens eine Digitalkamera verlagerbar angeordnet ist. Der Träger ist beispielsweise säulenartig ausgebildet und die mindestens eine Digitalkamera mittels eines Linearantriebs an dem Träger verfahrbar. Weiterhin ist der Träger beispielsweise als Basisbauteil eines Mehrachsroboters ausgebildet, an dem die mindestens eine Digitalkamera angeordnet ist. Die mindestens eine Digitalkamera ist mittels des jeweiligen Mehrachsroboters zum Erfassen der gesamten Höhe einer Seitenwand des Schienenfahrzeugs in einfacher Weise zu dem Schienenfahrzeug positionierbar. Der jeweilige Mehrachsroboter umfasst mindestens drei Bewegungsachsen, insbesondere mindestens vier Bewegungsachsen, und insbesondere mindestens fünf Bewegungsachsen. Der jeweilige Mehrachsroboter umfasst vorzugsweise höchstens sechs Bewegungsachsen. Die Bewegungsachsen sind vorzugsweise als Schwenkachsen ausgebildet.

Eine Reinigungsvorrichtung nach Anspruch 4 gewährleistet eine einfache, schnelle und zuverlässige automatische Reinigung. Die Prozessrichtung verläuft parallel zu einer Längsrichtung des zu reinigenden Schienenfahrzeugs. Dadurch, dass die mindestens eine Reinigungseinrichtung nach der mindestens einen Detektionseinrichtung angeordnet ist, können Verschmutzungen zunächst mittels der mindestens einen Detektionseinrichtung detektiert werden, so dass mittels der Steuereinrichtung ein Reinigungsprogramm ermittelt werden und anschließend die mindestens eine Reinigungseinrichtung mittels dieses Reinigungsprogramms gesteuert werden kann. Dadurch, dass die mindestens eine Überprüfungseinrichtung in der Prozessrichtung nach der mindestens einen Reinigungseinrichtung angeordnet ist, kann das Reinigungsergebnis überprüft und/oder dokumentiert werden. Die mittels der mindestens einen Überprüfungseinrichtung detektierten restlichen Verschmutzungen können insbesondere mit den mittels der mindestens einen Detektionseinrichtung detektierten ursprünglichen Verschmutzungen verglichen werden, so dass das Reinigungsergebnis bewertet werden kann und/oder mittels der Steuereinrichtung ein Nachreinigungsprogramm erstellt werden kann. Vorzugsweise weist die Reinigungsvorrichtung zum Anordnen an einer ersten Seite des Schienenfahrzeugs und an einer gegenüberliegenden zweiten Seite des Schienenfahrzeugs mindestens zwei Detektionseinrichtungen und/oder mindestens zwei Reinigungseinrichtungen und/oder mindestens zwei Überprüfungseinrichtungen auf. Die mindestens zwei Detektionseinrichtungen und/oder die mindestens zwei Reinigungseinrichtungen und/oder die mindestens zwei Überprüfungseinrichtungen sind insbesondere an der jeweiligen Seite des Schienenfahrzeugs in der Prozessrichtung nacheinander angeordnet. Die mindestens zwei Detektionseinrichtungen und/oder die mindestens zwei Überprüfungseinrichtungen sind auch in Verbindung mit mindestens einer Reinigungseinrichtung, die an der ersten Seite und an der zweiten Seite des Schienenfahrzeugs positionierbar ist, einsetzbar.

Eine Reinigungsvorrichtung nach Anspruch 5 gewährleistet eine einfache, schnelle und zuverlässige automatische Reinigung. Der mindestens eine Mehrachsroboter ist vorzugsweise an dem Träger mittels eines Antriebs verfahrbar angeordnet. Hierdurch kann der mindestens eine Mehrachsroboter zum Reinigen des Schienenfahrzeugs flexibel positioniert werden. Vorzugsweise ist der Träger zum Verlagern des mindestens einen Mehrachsroboters von einer ersten Seite des Schienenfahrzeugs zu einer zweiten gegenüberliegenden Seite des Schienenfahrzeugs portalartig ausgebildet. Die mindestens eine Reinigungseinrichtung weist insbesondere jeweils mindestens zwei Mehrachsroboter auf, die an einem gemeinsamen Träger und/oder an jeweils einem eigenen Träger angeordnet sind. Die mindestens zwei Mehrachsroboter sind insbesondere verfahrbar an dem gemeinsamen Träger bzw. dem jeweiligen Träger angeordnet. Vorzugsweise sind die mindestens zwei Mehrachsroboter senkrecht zu einer Prozessrichtung und/oder parallel zu einer Prozessrichtung verfahrbar.

Eine Reinigungsvorrichtung nach Anspruch 6 gewährleistet eine einfache, schnelle und zuverlässige automatische Reinigung. Vorzugsweise weist der mindestens eine Mehrachsroboter mindestens drei und/oder höchstens sechs Bewegungsachsen auf. Die Bewegungsachsen sind insbesondere als Schwenkachsen ausgebildet. Vorzugsweise umfasst der mindestens eine Mehrachsroboter eine Halteaufnahme zum Halten des mindestens einen Reinigungselements. Die Halteaufnahme ist insbesondere automatisch lösbar und automatisch spannbar, so dass das mindestens eine Reinigungselement automatisch wechselbar ist. Vorzugsweise umfasst die mindestens eine Reinigungseinrichtung ein Magazin zur Aufnahme von mindestens zwei unterschiedlichen Reinigungselementen.

Eine Reinigungsvorrichtung nach Anspruch 7 gewährleistet eine einfache, schnelle und zuverlässige automatische Reinigung. Der mindestens eine Sensor gewährleistet ein Erkennen bzw. Wiedererkennen der detektierten Verschmutzungen. Vorzugsweise ist der mindestens eine Sensor als Lichtsensor bzw. optischer Detektor ausgebildet. Vorzugsweise ist an dem mindestens einen Mehrachsroboter mindestens eine Digitalkamera angeordnet, die den mindestens einen Sensor umfasst. Der mindestens eine Sensor ist insbesondere im Bereich einer Halteaufnahme für das mindestens eine Reinigungselement angeordnet.

Eine Reinigungsvorrichtung nach Anspruch 8 gewährleistet eine einfache, schnelle und zuverlässige automatische Reinigung. Das Reinigungsmedium ist vorzugsweise Trockeneis bzw. Trockeneispellets und/oder eine chemische Reinigungsflüssigkeit und/oder Wasser. Vorzugsweise umfasst die mindestens eine Reinigungseinrichtung eine Bereitstellungseinheit zur Bereitstellung von Trockeneis und/oder eine Bereitstellungseinheit zur Bereitstellung einer chemischen Reinigungsflüssigkeit. Die Bereitstellungseinheit umfasst insbesondere einen Speicher zum Speichern des Reinigungsmediums und/oder eines Förderelements zum Fördern des Reinigungsmediums und/oder eine Förderleitung zum Fördern des Reinigungsmediums zu einem zugehörigen Reinigungselement.

Eine Reinigungsvorrichtung nach Anspruch 9 gewährleistet eine einfache, schnelle und zuverlässige automatische Reinigung. Die Bereitstellungseinheit dient zum Bereitstellen von Trockeneis bzw. Trockeneispellets. Der Trockeneiserzeuger ist insbesondere mit einem CO₂-Vorratsbehälter verbunden. Der Trockeneiserzeuger umfasst vorzugsweise einen Pelletierer. Der Trockeneisspeicher ist insbesondere als Behälter ausgebildet. Der Trockeneisspeicher ist vorzugsweise thermisch isoliert. Der Trockeneiserzeuger ist insbesondere mit dem Trockeneisspeicher verbunden, so dass das erzeugte Trockeneis automatisch in dem Trockeneisspeicher gespeichert wird.

Die Bereitstellungseinheit umfasst vorzugsweise einen Drucklufterzeuger und/oder einen Druckluftspeicher. Die Druckluft dient zum Ausbringen des Trockeneises bzw. zum Erzeugen eines Trockeneis-Druckluft-Gemischs. Vorzugsweise weist die Bereitstellungseinheit zum Erzeugen eines Trockeneis-Druckluft-Gemischs einen Dosierer auf.

Die Bereitstellungseinheit umfasst vorzugsweise einen Trockeneisausbringer mit einer Antriebseinheit und mindestens einem mittels der Antriebseinheit verlagerbaren Kontaktkörper zum Beschleunigen des Trockeneises auf eine Ausbringgeschwindigkeit. Hierdurch kann das Ausbringen bzw. Ausstrahlen des Trockeneises vollständig druckluftfrei oder unter Reduktion des eingesetzten Druckluftstroms und/oder der eingesetzten Druckluftmenge erfolgen.

Das Trockeneis bzw. die Trockeneispellets treffen mit einer hohen Aufprallenergie auf die Verschmutzungen. Aufgrund der Temperatureinflüsse, der Sublimation des Trockeneises und der Aufprallenergie werden Verschmutzungen wirkungsvoll entfernt. Vorzugsweise ist das Trockeneis aus flüssigem CO₂ hergestellt. Das Trockeneis wird insbesondere mittels einer Düse als Reinigungselement ausgebracht.

Eine Reinigungsvorrichtung nach Anspruch 10 gewährleistet eine einfache, schnelle und zuverlässige automatische Reinigung. Vorzugsweise umfasst die Reinigungsvorrichtung mindestens zwei unterschiedliche Reinigungselemente. Die mindestens zwei Reinigungselemente sind insbesondere in einem Magazin angeordnet, so dass der mindestens eine Mehrachsroboter einen automatischen Wechsel eines Reinigungselements durchführen kann. Das mindestens eine Reinigungselement umfasst beispielsweise eine Düse zum Ausbringen bzw. Versprühen einer chemischen Reinigungsflüssigkeit und/oder eines Trockeneis-Druckluft-Gemischs und/oder von Trockeneispellets und/oder von Wasser. Das mindestens eine Reinigungselement umfasst beispielsweise eine Bürste. Die Bürste ist beispielsweise drehantreibbar. Vorzugsweise sind die Bürste und die Düse zum mechanischen Reinigen mittels des Reinigungsmediums miteinander kombiniert.

Der Erfindung liegt ferner die Aufgabe zugrunde, eine Reinigungsstation zu schaffen, die eine einfache, schnelle und zuverlässige automatische Reinigung eines Schienenfahrzeugs ermöglicht.

Diese Aufgabe wird durch eine Reinigungsstation mit den Merkmalen des Anspruchs 11 gelöst. Die Reinigungsvorrichtung ist insbesondere seitlich neben dem Fahrweg angeordnet. Der Fahrweg ist vorzugsweise geradlinig ausgebildet. Die Reinigungsvorrichtung ist zumindest teilweise stationär angeordnet. Vorzugsweise sind der Fahrweg und die Reinigungsvorrichtung auf einem gemeinsamen Untergrund angeordnet. Der Fahrweg bzw. eine Längsrichtung des zu reinigenden Schienenfahrzeugs definiert eine Prozessrichtung für die Reinigung des Schienenfahrzeugs. Die Reinigungsstation umfasst insbesondere eine Schutzeinrichtung. Die Schutzeinrichtung dient zum Vermeiden eines Zutritts von Personen zu dem Fahrweg und/oder der Reinigungsvorrichtung. Vorzugsweise umgibt die Schutzeinrichtung den Fahrweg und die Reinigungsvorrichtung zumindest teilweise und bildet eine Außengrenze der Reinigungsstation. Die Schutzeinrichtung ist beispielsweise als Schutzzaun und/oder als Schutzeinhausung ausgebildet.

Eine Reinigungsstation nach Anspruch 12 gewährleistet eine einfache, schnelle und zuverlässige automatische Reinigung. Die mindestens eine Detektionseinrichtung und die mindestens eine Reinigungseinrichtung und ggf. die mindestens eine Überprüfungseinrichtung sind insbesondere an einer gemeinsamen Seite neben dem Fahrweg angeordnet, so dass eine Seite des Schienenfahrzeugs reinigbar ist. Die Reinigungsstation umfasst beispielsweise zwei Detektionseinrichtungen, die an einer ersten Seite und an einer zweiten Seite neben dem Fahrweg angeordnet sind, und/oder eine Reinigungseinrichtung, die an einer ersten Seite und an einer zweiten Seite des Fahrwegs positionierbar ist, und/oder zwei Überprüfungseinrichtungen, die an der ersten Seite und an der zweiten Seite angeordnet sind.

Eine Reinigungsstation nach Anspruch 13 gewährleistet eine einfache, schnelle und zuverlässige automatische Reinigung. Vorzugsweise sind an jeder Seite des Fahrwegs bzw. des zu reinigenden Schienenfahrzeugs eine Detektionseinrichtung, eine Reinigungseinrichtung und eine Überprüfungseinrichtung in der Prozessrichtung nacheinander angeordnet. Hierdurch können beide Seiten des Schienenfahrzeugs gleichzeitig gereinigt werden.

Der Erfindung liegt ferner die Aufgabe zugrunde, ein Verfahren zu schaffen, das eine einfache, schnelle und zuverlässige automatische Reinigung eines Schienenfahrzeugs, ermöglicht.

Diese Aufgabe wird durch ein Verfahren mit den Merkmalen des Anspruchs 14 gelöst. Die Vorteile des erfindungsgemäßen Verfahrens entsprechen den bereits beschriebenen Vorteilen der erfindungsgemäßen Reinigungsstation bzw. der erfindungsgemäßen Reinigungsvorrichtung. Das Bewegen des Schienenfahrzeugs erfolgt teilautomatisiert und/oder vollautomatisiert mittels einer Fahrbewegungssteuereinrichtung. Das Bewegen des Schienenfahrzeugs erfolgt vorzugsweise in Zeitintervallen mit Unterbrechungen oder kontinuierlich. Vorzugsweise erfolgt das Bewegen des Schienenfahrzeugs mit einer konstanten Geschwindigkeit. Anhand der konstanten Geschwindigkeit und eines Abstands zwischen der mindestens einen Detektionseinrichtung und der mindestens einen Reinigungseinrichtung kann die Position einer detektierten Verschmutzung relativ zu der mindestens einen Reinigungseinrichtung ermittelt werden. Nach dem Reinigen des Schienenfahrzeugs kann mittels mindestens einer Überprüfungseinrichtung ein Überprüfen des gereinigten Schienenferfolgen. Das gereinigte Schienenfahrzeug bzw. das Reinigungsergebnis kann mittels der mindestens einen Überprüfungseinrichtung dokumentiert und bewertet werden. Ergibt die Bewertung ein nicht akzeptables Reinigungsergebnis, so kann ein Nachreinigen des Schienenfahrzeugs mittels der mindestens einen Reinigungseinrichtung erfolgen. Hierzu kann die mindestens eine Reinigungseinrichtung in Abhängigkeit des detektierten Reinigungsergebnisses bzw. der detektierten restlichen Verschmutzungen mittels der Steuereinrichtung gesteuert werden. Die Steuereinrichtung betreibt die mindestens eine Reinigungseinrichtung beim erstmaligen Reinigen des Schienenfahrzeugs und beim Nachreinigen des Schienenfahrzeugs insbesondere mit unterschiedlichen Reinigungsparametern. Reinigungsparameter sind beispielsweise ein zu verwendendes Reinigungselement, ein Reinigungsmedium, ein Mengenstrom, ein Druck und/oder eine Temperatur. Das Reinigen des Schienenfahrzeugs erfolgt insbesondere derart, dass Trockeneis auf die Verschmutzungen aufgebracht wird.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Draufsicht auf eine Reinigungsstation gemäß einem ersten Ausführungsbeispiel mit Detektionseinrichtungen, Reinigungseinrichtungen und Überprüfungseinrichtungen,
- Fig. 2: einen ausschnittsweisen Schnitt durch die Reinigungsstation gemäß Fig. 1 entlang der Schnittlinie II-II in Fig. 1 zur Veranschaulichung der Detektionseinrichtungen,
- Fig. 3: einen ausschnittsweisen Schnitt durch die Reinigungsstation gemäß Fig. 1 entlang der Schnittlinie III-III zur Veranschaulichung der Reinigungseinrichtungen,
- Fig. 4: einen ausschnittsweisen Schnitt durch die Reinigungsstation gemäß Fig. 1 entlang der Schnittlinie IV-IV zur Veranschaulichung der Überprüfungseinrichtungen,
- Fig. 5: einen ausschnittsweisen Schnitt durch eine Reinigungsstation gemäß einem zweiten Ausführungsbeispiel zur Veranschaulichung der Detektionseinrichtungen,
- Fig. 6: einen ausschnittsweisen Schnitt durch die Reinigungsstation gemäß dem zweiten Ausführungsbeispiel zur Veranschaulichung einer verfahrbaren Reinigungseinrichtung, und
- Fig. 7: einen ausschnittsweisen Schnitt durch die Reinigungsstation gemäß dem zweiten Ausführungsbeispiel zur Veranschaulichung der Überprüfungseinrichtungen.

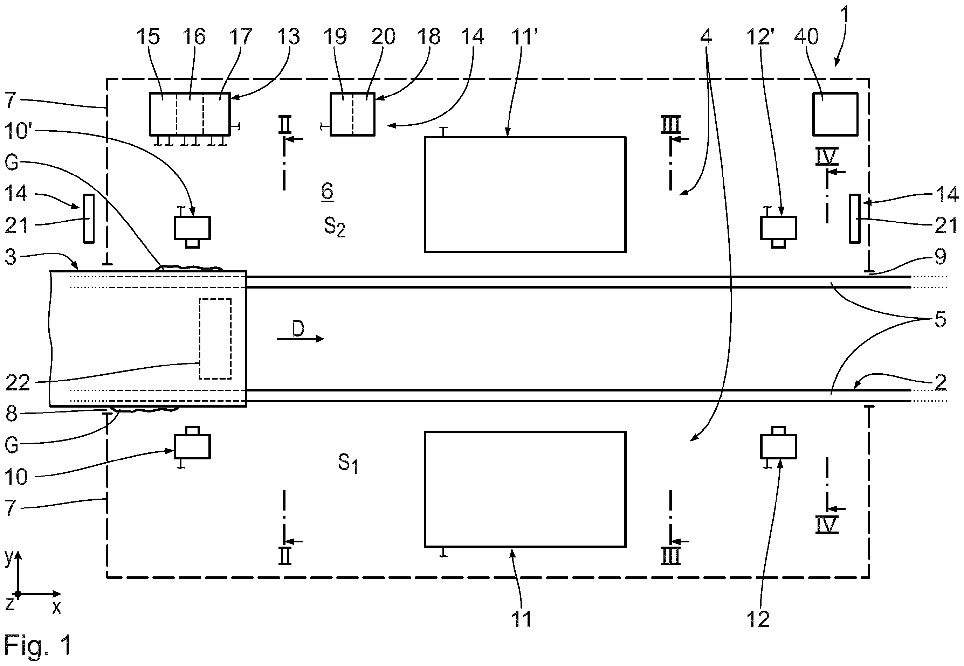

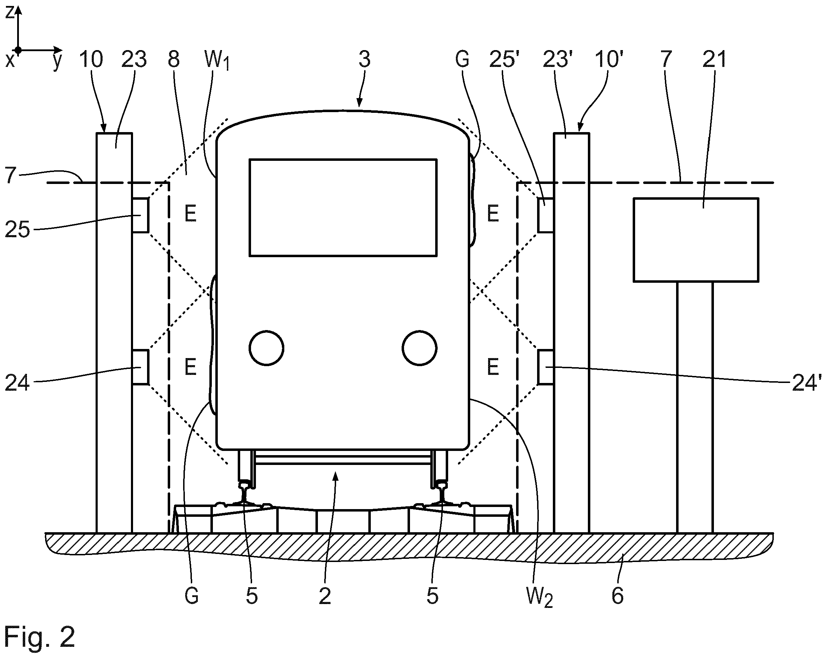

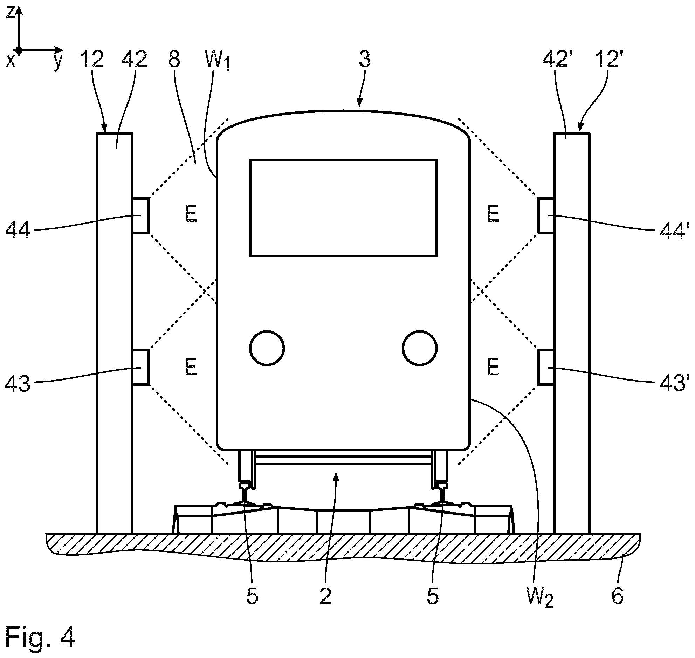

Nachfolgend ist anhand der Fig. 1 bis 4 ein erstes Ausführungsbeispiel der Erfindung beschrieben. Die in Fig. 1 dargestellte Reinigungsstation 1 umfasst einen als Gleis 2 ausgebildeten Fahrweg für ein Schienenfahrzeug 3. Das Gleis 2 umfasst zwei Schienen 5, die an einem Untergrund 6 angeordnet und befestigt sind. Die Schienen 5 erstrecken sich in einer x-Richtung und sind in einer senkrecht zu der x-Richtung verlaufenden y-Richtung voneinander beabstandet.

Zum Reinigen des Schienenfahrzeugs 3 umfasst die Reinigungsstation 1 eine Reinigungsvorrichtung 4. Die Reinigungsvorrichtung 4 ist an dem Untergrund 6 seitlich neben den Schienen 5 stationär angeordnet bzw. befestigt. Die Reinigungsstation 1 umfasst eine Schutzeinrichtung 7, die die Reinigungsvorrichtung 4 und den durch die Reinigungsvorrichtung 4 vorgegebenen Abschnitt des Gleises 2 seitlich mit Ausnahme einer Einfahrt 8 und einer Ausfahrt 9 umgibt. Die Schutzeinrichtung 7 ist beispielsweise als Schutzzaun oder als Schutzeinhausung ausgebildet.

Die Reinigungsvorrichtung 4 umfasst eine erste Detektionseinrichtung 10, eine erste Reinigungseinrichtung 11 und eine erste Überprüfungseinrichtung 12, die an einer ersten Seite Si des Gleises 2 in einer Prozessrichtung D nacheinander angeordnet sind. Die Prozessrichtung D verläuft in Richtung des Gleises 2 von der ersten Detektionseinrichtung 10 zu der ersten Reinigungseinrichtung 11 bzw. von der ersten Reinigungseinrichtung 11 zu der ersten Überprüfungseinrichtung 12. Die Prozessrichtung D verläuft parallel zu der x-Richtung.

Die Reinigungsvorrichtung 4 umfasst ferner eine zweite Detektionseinrichtung 10`, eine zweite Reinigungseinrichtung 11' und eine zweite Überprüfungseinrichtung 12', die an einer zweiten Seite S₂ des Gleises 2 gegenüberliegend zu der ersten Seite Si in der Prozessrichtung D nacheinander angeordnet sind.

Die Reinigungsvorrichtung 4 weist eine Steuereinrichtung 13 und eine Fahrbewegungssteuereinrichtung 14 auf. Die Steuereinrichtung 13 umfasst eine zentrale Steuerung 15, eine Reinigungssteuerung 16 und eine Fahrbewegungssteuerung 17. Die Steuereinrichtung 13 ist in Signalverbindung mit den Detektionseinrichtungen 10, 10', den Reinigungseinrichtungen 11, 11' und den Überprüfungseinrichtungen 12, 12' sowie mit der Fahrbewegungssteuereinrichtung 14.

Die Fahrbewegungssteuereinrichtung 14 dient zum teilautomatisierten und/oder vollautomatisierten Steuern der Fahrbewegung des zu reinigenden Schienenfahrzeugs 3. Die Fahrbewegungssteuereinrichtung 14 umfasst eine Sende- und Empfangseinheit 18 mit einem Sender 19 und einem Empfänger 20 zur drahtlosen Übertragung von Steuersignalen. Die Fahrbewegungssteuereinrichtung 14 umfasst ferner mehrere Steuerelemente 21 in Form von Anzeigentafeln, die in der Prozessrichtung D entlang des Gleises 2 angeordnet sind. Die Steuerelemente 21 sind in Signalverbindung mit der Sende- und Empfangseinheit 18. Bei einer automatischen Steuerung der Fahrbewegung des Schienenfahrzeugs 3 ist die Sende- und Empfangseinheit 18 in Signalverbindung mit einer Fahrzeugsteuereinrichtung 22 des Schienenfahrzeugs 3.

Die Detektionseinrichtungen 10, 10' dienen zum Detektieren von Verschmutzungen G an dem zu reinigenden Schienenfahrzeug 3. Die Detektionseinrichtungen 10, 10' umfassen jeweils einen säulenartigen Träger 23 bzw. 23` und zugehörige Digitalkameras 24, 25 bzw. 24', 25`. Der jeweilige Träger 23, 23' ist fest mit dem Untergrund 6 verbunden. Die Digitalkameras 24, 25, 24', 25' sind in einer vertikalen z-Richtung beabstandet voneinander an dem jeweils zugehörigen Träger 23, 23' angeordnet. Die z-Richtung verläuft senkrecht zu der x-Richtung und der y-Richtung. Die Digitalkameras 24, 25, 24', 25` weisen einen jeweiligen Erfassungsbereich E auf. Die Digitalkameras 24, 25, 24', 25' sind derart angeordnet, dass die Erfassungsbereiche E Seitenwände W₁ und W₂ des Schienenfahrzeugs 3 vollständig erfassen. Die Digitalkameras 24, 25, 24`, 25` weisen einen jeweiligen Lichtsensor bzw. optischen Detektor auf, der in üblicher Weise Licht in Bilddaten wandelt. Die Bilddaten werden der Steuereinrichtung 13 bereitgestellt.

Die Reinigungseinrichtungen 11, 11' dienen zum Reinigen des Schienenfahrzeugs 3 bzw. zum Entfernen der detektierten Verschmutzungen G. Die Reinigungseinrichtungen 11, 11' umfassen jeweils einen Mehrachsroboter 26, 26', ein zugehöriges Reinigungsgerät 27, 27` und eine zugehörige Bereitstellungseinheit 28, 28` zum Bereitstellen eines Reinigungsmediums in Form von Trockeneis P bzw. Trockeneispellets. Der jeweilige Mehrachsroboter 26, 26' ist mit einem Basisbauteil 29, 29` an dem Untergrund 6 befestigt. Der jeweilige Mehrachsroboter 26, 26` umfasst sechs Bewegungsachsen B₁ bis B₆. Die Bewegungsachsen B₁ bis B₆ sind als Schwenkachsen ausgebildet. Die Bewegungsachse B₆ ist durch eine jeweilige Halteaufnahme 30, 30` zum Halten des zugehörigen Reinigungsgeräts 27, 27` ausgebildet.

Das jeweilige Reinigungsgerät 27, 27` umfasst einen Halter 31, 31`, der in der zugehörigen Halteaufnahme 30, 30` geklemmt bzw. gespannt ist. An dem jeweiligen Halter 31, 31` ist ein Reinigungselement 32, 32` und eine Schutzabdeckung 33, 33` befestigt. Die Reinigungselemente 32, 32` sind als Düsen zum Ausbringen eines Trockeneis-Druckluft-Gemischs M ausgebildet.

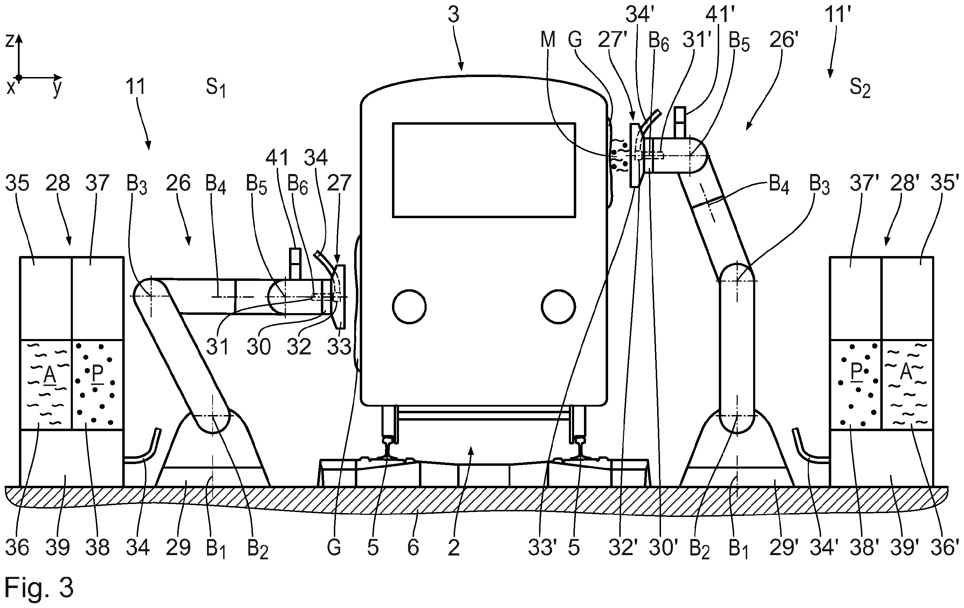

Das jeweilige Reinigungselement 32, 32` ist mittels einer zugehörigen Gemischleitung 34, 34` mit der zugehörigen Bereitstellungseinheit 28, 28` verbunden. Die Gemischleitungen 34, 34` sind in Fig. 3 lediglich angedeutet.

Die jeweilige Bereitstellungseinheit 28, 28` umfasst einen Drucklufterzeuger 35, 35`, einen Druckluftspeicher 36, 36` sowie einen Trockeneiserzeuger 37, 37`, und einen Trockeneisspeicher 38, 38`. Die Druckluftspeicher 36, 36` und die Trockeneisspeicher 38, 38` sind mit einem jeweils zugehörigen Dosierer 39, 39` verbunden, der die zugehörige Gemischleitung 34, 34` mit dem Trockeneis-Druckluft-Gemisch M versorgt. Zur Bereitstellung von flüssigem CO₂ umfasst die Reinigungsvorrichtung 4 einen CO₂-Vorratsbehälter 40. Der COz-Vorratsbehälter 40 ist über nicht näher dargestellte Leitungen mit den Trockeneiserzeugern 37, 37` verbunden.

Zum Erkennen der detektierten Verschmutzungen G umfassen die Mehrachsroboter 26, 26` eine jeweilige Digitalkamera 41, 41`, die die bereits detektierten Verschmutzungen G wiedererkennen. Die Digitalkameras 41, 41 ` umfassen einen jeweiligen Lichtsensor bzw. optischen Detektor.

Die Überprüfungseinrichtungen 12, 12' sind entsprechend den Detektionseinrichtungen 10, 10' ausgebildet. Die Überprüfungseinrichtungen 12, 12' dienen zum Detektieren von Verschmutzungen G an dem zu reinigenden Schienenfahrzeug 3. Die Überprüfungseinrichtungen 12, 12' umfassen jeweils einen säulenartigen Träger 42 bzw. 42` und zugehörige Digitalkameras 43, 44 bzw. 43', 44`. Der jeweilige Träger 42, 42` ist fest mit dem Untergrund 6 verbunden. Die Digitalkameras 43, 44, 43', 44` sind in der vertikalen z-Richtung beabstandet voneinander an dem jeweils zugehörigen Träger 42, 42` angeordnet. Die Digitalkameras 43, 44, 43', 44` weisen einen jeweiligen Erfassungsbereich E auf. Die Digitalkameras 43, 44, 43', 44` sind derart angeordnet, dass die Erfassungsbereiche E die Seitenwände W₁ und W₂ des Schienenfahrzeugs 3 vollständig erfassen. Die Digitalkameras 43, 44, 43', 44` weisen einen jeweiligen Lichtsensor bzw. optischen Detektor auf, der in üblicher Weise Licht in Bilddaten wandelt. Die Bilddaten werden der Steuereinrichtung 13 bereitgestellt.

Nachfolgend ist die Funktionsweise der Reinigungsstation 1 beschrieben:
Das Schienenfahrzeug 3 mit den Verschmutzungen G wird von einem Fahrer zu der Reinigungsstation 1 gefahren. Das Schienenfahrzeug 3 ist beispielsweise ein Nahverkehrszug, der Graffitis als Verschmutzungen G aufweist. Diese Verschmutzungen G sollen in der Reinigungsstation 1 automatisch entfernt werden.

Die Fahrbewegungssteuereinrichtung 14 gibt dem Fahrer mittels des vor der Einfahrt 8 angeordneten Steuerelements 21 ein Stoppsignal. Die Fahrbewegungssteuereinrichtung 14 fragt mittels der Sende- und Empfangseinheit 18 bei der Fahrzeugsteuereinrichtung 22 an, ob diese eine Signalverbindung zulassen möchte. Der Fahrer kann über eine entsprechende Eingabe in der Fahrzeugsteuereinrichtung 22 die Signalverbindung zum vollautomatischen Steuern der Fahrbewegung des Schienenfahrzeugs 3 in der Reinigungsstation 1 zulassen. Alternativ kann der Fahrer die Signalverbindung nicht zulassen, so dass der Fahrer anhand der von der Fahrbewegungssteuereinrichtung 14 zur Verfügung gestellten Informationen das Schienenfahrzeug 3 selbst durch die Reinigungsstation 1 bewegen muss. Die Fahrbewegung des Schienenfahrzeugs 3 wird diesem Fall mittels der Fahrbewegungssteuereinrichtung 14 teilautomatisiert gesteuert.

Nachfolgend ist das vollautomatisierte Steuern der Fahrbewegung des Schienenfahrzeugs 3 beschrieben. Parallel zu der vollautomatischen Steuerung der Fahrbewegung übermittelt die Sende- und Empfangseinheit 18 den Steuerelementen 21 Informationen über die gewünschte Fahrbewegung, insbesondere über die Fahrgeschwindigkeit und die Fahrrichtung sowie Informationen darüber, ob der Fahrer das Schienenfahrzeug 3 langsamer oder schneller fahren oder anhalten soll. Der Fahrer kann jederzeit die vollautomatische Steuerung der Fahrbewegung abbrechen und die Fahrbewegung aufgrund der zur Verfügung gestellten Informationen teilautomatisiert fortsetzen.

Das Schienenfahrzeug 3 wird zunächst durch die Einfahrt 8 in die Reinigungsstation 1 gefahren. Das Schienenfahrzeug 3 bewegt sich mit geringer Geschwindigkeit an den Detektionseinrichtungen 10, 10' vorbei, so dass diese mittels der Digitalkameras 24, 24', 25, 25' die Verschmutzungen G detektieren können. Die von den Digitalkameras 24, 24', 25, 25' ermittelten Bilddaten werden an die Steuereinrichtung 13 übermittelt, die anhand dieser Bilddaten ein jeweiliges Reinigungsprogramm für die Reinigungseinrichtungen 11, 11' erstellt. Das jeweilige Reinigungsprogramm wird in der Reinigungssteuerung 16 abgearbeitet und die Reinigungseinrichtungen 11, 11' in Abhängigkeit der detektierten Verschmutzungen G entsprechend angesteuert.

Erreicht das Schienenfahrzeug 3 die Reinigungseinrichtungen 11, 11', so wird mit der Reinigung begonnen. Die Position der Verschmutzungen G in der x-Richtung kann bei der automatischen Steuerung der Fahrbewegung anhand des Abstands in der x-Richtung zwischen den Detektionseinrichtungen 10, 10' und den zugehörigen Reinigungseinrichtungen 11, 11` sowie anhand der Fahrgeschwindigkeit ermittelt werden und/oder bei der automatischen Steuerung bzw. der teilautomatischen Steuerung der Fahrbewegung mittels der Digitalkameras 41, 41' erkannt werden.

Mittels der Reinigungselemente 32, 32` wird das Trockeneis-Druckluft-Gemisch M auf die Verschmutzungen G gesprüht, so dass diese möglichst vollständig entfernt werden. Bei Bedarf verlangsamt die Fahrbewegungssteuereinrichtung 14 die Fahrgeschwindigkeit und/oder stoppt das Schienenfahrzeug 3 vorübergehend. Das jeweilige Reinigungselement 32, 32` wird entsprechend der Position der Verschmutzungen G mittels des zugehörigen Mehrachsroboters 26, 26` positioniert. Das Trockeneis-Druckluft-Gemisch M wird mittels des jeweiligen Dosierers 39, 39` erzeugt, der aus dem jeweiligen Trockeneisspeicher 38, 38` mit Trockeneis P und dem jeweiligen Druckluftspeicher 36, 36` mit Druckluft A versorgt wird. Die Druckluft A wird mittels des jeweiligen Drucklufterzeugers 35, 35` erzeugt. Das Trockeneis P bzw. die Trockeneispellets werden mittels des jeweiligen Trockeneiserzeugers 37, 37` aus flüssigem CO₂ erzeugt, das in dem COz-Vorratsbehälter 40 gespeichert ist.

An die Schutzabdeckungen 33, 33 ` kann zusätzlich eine jeweilige nicht näher dargestellte Absaugeinrichtung angeschlossen werden, so dass entfernte Verschmutzungen G aus der jeweiligen Schutzabdeckung 33, 33' abgesaugt und zur Entsorgung gesammelt werden können.

Das Schienenfahrzeug 3 wird zu den Überprüfungseinrichtungen 12, 12' gefahren. Die Überprüfungseinrichtungen 12, 12' überprüfen, ob die Verschmutzungen G entfernt wurden. Hierzu werden mittels der Digitalkameras 43, 43', 44, 44` Bilddaten erfasst, die an die Steuereinrichtung 13 übermittelt werden. In der Steuereinrichtung 13 werden die Bilddaten der Überprüfungseinrichtungen 12, 12' mit den Bilddaten der Detektionseinrichtungen 10, 10' verglichen und das Reinigungsergebnis dokumentiert und bewertet. Ergibt die Bewertung ein nicht akzeptables Reinigungsergebnis, so wird von der Steuereinrichtung 13 anhand der Bilddaten der Überprüfungseinrichtungen 12, 12' ein Nachreinigungsprogramm erstellt. Das Schienenfahrzeug 3 wird zur Nachreinigung zunächst in dem erforderlichen Maße in entgegengesetzter Richtung zu der Prozessrichtung D gefahren, so dass restliche Verschmutzungen G wieder vor den Reinigungseinrichtungen 11, 11' positioniert sind. Anschließend erfolgt eine Nachreinigung und ein Entfernen der restlichen Verschmutzungen G in entsprechender Weise zu der bereits beschriebenen Reinigung.

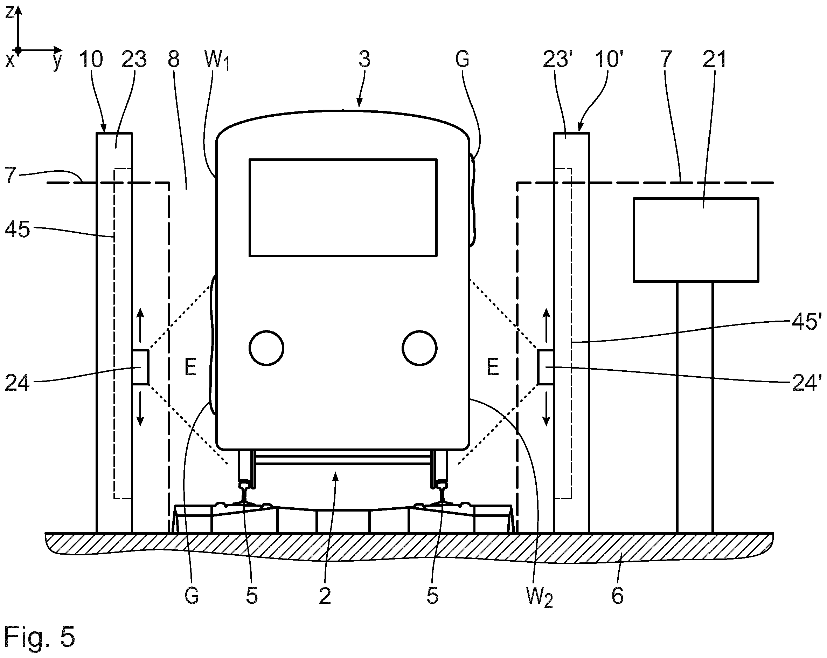

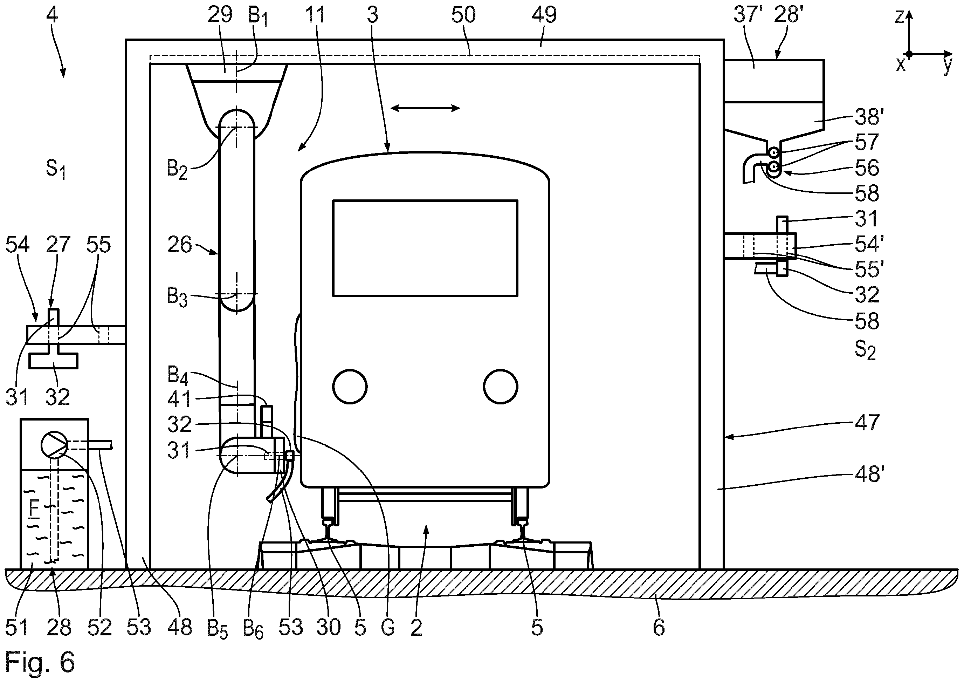

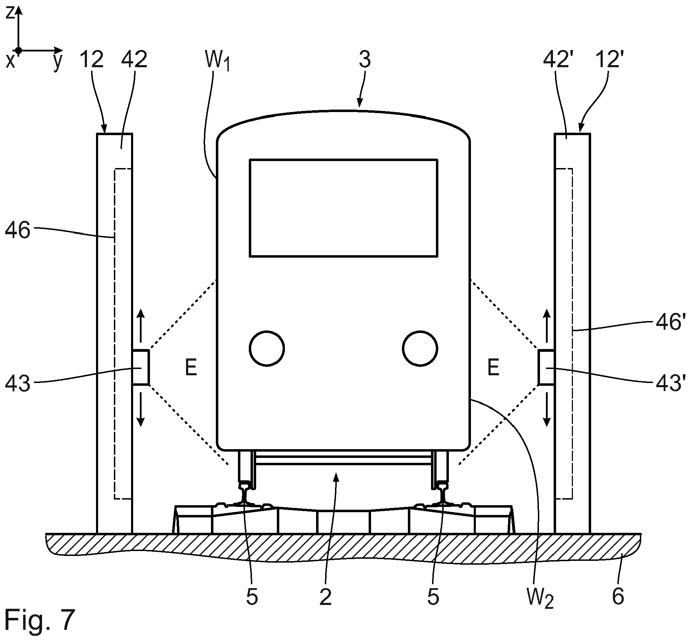

Nachfolgend ist anhand der Fig. 5 bis 7 ein zweites Ausführungsbeispiel der Erfindung beschrieben. Im Unterschied zu dem vorangegangenen Ausführungsbeispiel weisen die Detektionseinrichtungen 10, 10' jeweils lediglich eine Digitalkamera 24 bzw. 24` auf, die mittels eines jeweiligen Linearantriebs 45, 45'an dem zugehörigen Träger 23 bzw. 23' linear verfahrbar sind. Zum Detektieren der Verschmutzungen G werden die Digitalkameras 24, 24` so verfahren, dass mittels des jeweiligen Erfassungsbereichs E die gesamte Seitenwand W₁ bzw. W₂ hinsichtlich möglicher Verschmutzungen G erfasst wird.

Entsprechend weisen die Überprüfungseinrichtungen 12, 12' jeweils lediglich eine Digitalkamera 43 bzw. 43' auf, die mittels eines jeweiligen Linearantriebs 46, 46`an dem zugehörigen Träger 42 bzw. 42` linear verfahrbar sind. Zum Überprüfen des Reinigungsergebnisses werden die Digitalkameras 43, 43 ` so verfahren, dass mittels des jeweiligen Erfassungsbereichs E die gesamte Seitenwand W₁ bzw. W₂ hinsichtlich restlicher Verschmutzungen G erfasst wird.

Die Reinigungsvorrichtung 4 umfasst lediglich eine Reinigungseinrichtung 11. Die Reinigungseinrichtung 11 umfasst einen U-förmigen Träger 47 mit zwei Stützen 48, 48`, an denen ein Querträger 49 befestigt ist. Der Träger 47 ist somit portalartig ausgebildet. Die Stützen 48, 48` sind an dem Untergrund 6 befestigt. Die Reinigungseinrichtung 11 umfasst lediglich einen Mehrachsroboter 26, der hängend an dem Querträger 49 angeordnet ist. Der Mehrachsroboter 26 ist an dem Querträger 49 mittels eines Linearantriebs 50 in der y-Richtung linear verfahrbar.

Die Reinigungseinrichtung 11 umfasst eine erste Bereitstellungseinheit 28 zur Bereitstellung einer chemischen Reinigungsflüssigkeit F. Die erste Bereitstellungseinheit 28 umfasst einen als Behälter ausgebildeten Speicher 51 zur Aufnahme der Reinigungsflüssigkeit F und ein als Förderpumpe ausgebildetes Förderelement 52 zum Fördern der Reinigungsflüssigkeit F. Das Förderelement 52 ist mittels einer Leitung 53 mit einem ersten Reinigungselement 32 in Form einer Düse verbunden.

Die Reinigungsvorrichtung 4 umfasst ferner ein Magazin 54 zur Aufnahme von Reinigungsgeräten 27 bzw. Reinigungselementen 32. Das Magazin 54 ist in einem Zugriffsbereichs des Mehrachsroboters 26 angeordnet, beispielsweise an der Stütze 48. Das Magazin 54 umfasst mehrere Magazinaufnahmen 55. In einer Magazinaufnahme 55 ist beispielsweise ein mechanisches Reinigungsgerät 27 mit einer Bürste als Reinigungselement 32 angeordnet.

Die Reinigungsvorrichtung 4 umfasst ferner eine zweite Bereitstellungseinheit 28` zum Bereitstellen eines Reinigungsmediums in Form von Trockeneis P. Die Bereitstellungseinheit 28` umfasst einen Trockeneiserzeuger 37` und einen Trockeneisspeicher 38`. Der Trockeneisspeicher 38` mündet in einen Trockeneisausbringer 56, der zwei mittels einer nicht näher dargestellten Antriebseinheit drehantreibbare Kontaktelemente 57 umfasst. Die Kontaktelemente 57 sind als Kontaktwalzen ausgebildet. Mittels der Kontaktelemente 57 werden die Trockeneispellets bzw. das Trockeneis P auf eine Ausbringgeschwindigkeit beschleunigt. Das Ausbringen des Trockeneises P bzw. der Trockeneispellets kann durch Druckluft A unterstützt werden. Der Trockeneisausbringer 56 ist über eine Leitung 58 mit einem Reinigungselement 32 in Form einer Düse verbunden. Das Reinigungselement 32 kann in einer Magazinaufnahme 55` eines Magazins 54` entsprechend zu dem Magazin 54 abgelegt werden. Hinsichtlich des weiteren Aufbaus und der weiteren Funktionsweise wird auf das vorangegangene Ausführungsbeispiel verwiesen.

Allgemein gilt Folgendes:
Die Reinigungsstation 1 bzw. die Reinigungsvorrichtung 4 ist so ausgebildet, dass ein Lichtraumprofil des Fahrzeugs bzw. des Schienenfahrzeugs 3 nicht verletzt wird. Die Reinigungsvorrichtung 4 ist an eine zentrale Energieversorgung angeschlossen, vorzugsweise an das Energieversorgungsnetz. Die jeweilige Reinigungseinrichtung 11, 11' kann bei Bedarf auch mehrere Mehrachsroboter 26, 26` umfassen. Das Durchfahren der Reinigungsstation 1 erfolgt vorzugsweise höchstens mit einer Fahrgeschwindigkeit von 10 km/h, insbesondere von höchstens 5 km/h, und insbesondere von höchstens 3 km/h.

## Patentansprüche

1. Reinigungsvorrichtung zum Reinigen eines Schienenfahrzeugs, umfassend
- mindestens eine Detektionseinrichtung (10, 10') zum Detektieren von Verschmutzungen (G) an einem zu reinigenden Schienenfahrzeug,
- mindestens eine Reinigungseinrichtung (11, 11') zum Reinigen des Schienenfahrzeugs mit
-- mindestens einem Reinigungselement (32, 32'), und
-- mindestens einem Mehrachsroboter (26, 26') zum Positionieren des mindestens einen Reinigungselements (32, 32') relativ zu dem Schienenfahrzeug,
- eine Steuereinrichtung (13) zum Steuern der mindestens einen Reinigungseinrichtung (11, 11') in Abhängigkeit der detektierten Verschmutzungen (G),
**gekennzeichnet**
**durch** eine Fahrbewegungssteuereinrichtung (14) zum Steuern der Fahrbewegung des zu reinigenden Schienenfahrzeugs in Abhängigkeit der detektierten Verschmutzungen (G).

2. Reinigungsvorrichtung nach Anspruch 1, **gekennzeichnet durch** mindestens eine Überprüfungseinrichtung (12, 12') zum Überprüfen des gereinigten Schienenfahrzeugs.

3. Reinigungsvorrichtung nach Anspruch 1 oder 2, **dadurch gekennzeichnet**
**dass** die mindestens eine Detektionseinrichtung (10, 10') und/oder die mindestens eine Überprüfungseinrichtung (12, 12') jeweils mindestens eine Digitalkamera (24, 24', 25, 25', 43, 43', 44, 44') umfasst.

4. Reinigungsvorrichtung nach mindestens einem der vorangegangenen Ansprüche, **dadurch gekennzeichnet,**
**dass** die mindestens eine Detektionseinrichtung (10, 10') und/oder die mindestens eine Reinigungseinrichtung (11, 11') und/oder die mindestens eine Überprüfungseinrichtung (12, 12') in einer Prozessrichtung (D) nacheinander angeordnet sind.

5. Reinigungsvorrichtung nach mindestens einem der vorangegangenen Ansprüche, **dadurch gekennzeichnet,**
**dass** die mindestens eine Reinigungseinrichtung (28) mindestens einen Träger (47) umfasst, an dem der mindestens eine Mehrachsroboter (26) angeordnet ist.

6. Reinigungsvorrichtung nach mindestens einem der vorangegangenen Ansprüche, **dadurch gekennzeichnet,**
**dass** der mindestens eine Mehrachsroboter (26, 26') mindestens drei, insbesondere mindestens vier, und insbesondere mindestens fünf Bewegungsachsen (Bi bis B₆) umfasst.

7. Reinigungsvorrichtung nach mindestens einem der vorangegangenen Ansprüche, **dadurch gekennzeichnet,**
**dass** der mindestens eine Mehrachsroboter (26, 26') mindestens einen Sensor zum Erkennen der Verschmutzungen (G) umfasst.

8. Reinigungsvorrichtung nach mindestens einem der vorangegangenen Ansprüche, **dadurch gekennzeichnet,**
**dass** die mindestens eine Reinigungseinrichtung (11, 11') mindestens eine Bereitstellungseinheit (28, 28') zur Bereitstellung eines Reinigungsmediums, insbesondere zur Bereitstellung von Trockeneis (P), umfasst.

9. Reinigungsvorrichtung nach Anspruch 8, **dadurch gekennzeichnet dass** die Bereitstellungseinheit (28, 28`) einen Trockeneiserzeuger (37, 37') und/oder einen Trockeneisspeicher (38, 38') umfasst.

10. Reinigungsvorrichtung nach Anspruch 8 oder 9, **dadurch gekennzeichnet**
**dass** das mindestens eine Reinigungselement (32, 32') eine Düse und/oder ein Bürste umfasst.

11. Reinigungsstation zum Reinigen eines Schienenfahrzeugs (3), umfassend
- einen Fahrweg, insbesondere ein Gleis (2), und
- eine Reinigungsvorrichtung (4) nach mindestens einem der Ansprüche 1 bis 10, die zumindest teilweise stationär angeordnet ist.

12. Reinigungsstation nach Anspruch 11, **dadurch gekennzeichnet, dass** die mindestens eine Detektionseinrichtung (10, 10') und/oder die mindestens eine Reinigungseinrichtung (11, 11') und/oder die mindestens eine Überprüfungseinrichtung (12, 12') in einer Prozessrichtung (D) nacheinander und/oder seitlich neben dem Fahrweg angeordnet sind.

13. Reinigungsstation nach Anspruch 11 oder 12, **dadurch gekennzeichnet,**
**dass** eine erste Detektionseinrichtung (10) und/oder eine erste Reinigungseinrichtung (11) und/oder eine erste Überprüfungseinrichtung (12) an einer ersten Seite (S₁) neben dem Fahrweg angeordnet ist, und **dass** eine zweite Detektionseinrichtung (10') und/oder eine zweite Reinigungseinrichtung (11') und/oder eine zweite Überprüfungseinrichtung (12') an einer zweiten Seite (S₂) neben dem Fahrweg angeordnet ist.

14. Verfahren zum Reinigen eines Schienenfahrzeugs, mit den Schritten:
- Bereitstellen einer Reinigungsstation (1) nach mindestens einem der Ansprüche 11 bis 13,
- Bewegen des Schienenfahrzeugs entlang des Fahrwegs,
- Detektieren von Verschmutzungen (G) an dem Schienenfahrzeug mittels der mindestens einen Detektionseinrichtung (10, 10'), wobei eine Fahrbewegungssteuereinrichtung (14) zum Steuern der Fahrbewegung des zu reinigenden Schienenfahrzeugs in Abhängigkeit der detektierten Verschmutzungen (G) vorgesehen ist,
- Steuern der mindestens einen Reinigungseinrichtung (11, 11`) in Abhängigkeit der detektierten Verschmutzungen (G) mittels der Steuereinrichtung (13), und
- Reinigen des Schienenfahrzeugs mittels der mindestens einen Reinigungseinrichtung (11, 11').

## Claims

1. A cleaning apparatus for cleaning a rail vehicle, comprising
- at least one detection device (10, 10') for detecting soiling (G) on a rail vehicle to be cleaned,
- at least one cleaning device (11, 11') for cleaning the rail vehicle having
-- at least one cleaning element (32, 32'), and
-- at least one multi-axis robot (26, 26') for positioning the at least one cleaning element (32, 32') relative to the rail vehicle,
- a control device (13) for controlling the at least one cleaning device (11, 11') in dependence on the detected soiling (G),
**characterized**
**by** a travel motion control device (14) for controlling the travel motion of the vehicle to be cleaned in dependence on the detected soiling (G).

2. A cleaning apparatus according to claim 1, **characterized by** at least one inspection device (12, 12') for inspecting the cleaned rail vehicle.

3. A cleaning apparatus according to claim 1 or 2, **characterized in that** the at least one detection device (10, 10') and/or the at least one inspection device (12, 12') each comprises at least one digital camera (24, 24', 25, 25', 43, 43', 44, 44').

4. A cleaning apparatus according to at least one of the preceding claims, **characterized in**
**that** the at least one detection device (10, 10') and/or the at least one cleaning device (11, 11') and/or the at least one inspection device (12, 12') are arranged one after the other in a process direction (D).

5. A cleaning apparatus according to at least one of the preceding claims, **characterized in**
**that** the at least one cleaning device (28) comprises at least one support (47) at which the at least one multi-axis robot (26) is arranged.

6. A cleaning apparatus according to at least one of the preceding claims, **characterized in**
**that** the at least one multi-axis robot (26, 26') comprises at least three, in particular at least four, and in particular at least five movement axes (Bi to B₆).

7. A cleaning apparatus according to at least one of the preceding claims, **characterized in**
**that** the at least one multi-axis robot (26, 26') comprises at least one sensor for detecting the soiling (G).

8. A cleaning apparatus according to at least one of the preceding claims, **characterized in**
**that** the at least one cleaning device (11, 11') comprises at least one provision unit (28, 28') for providing a cleaning medium, in particular for providing dry ice (P).

9. A cleaning apparatus according to claim 8, **characterized in that** the provision unit (28, 28') comprises a dry ice generator (37, 37') and/or a dry ice reservoir (38, 38').

10. A cleaning apparatus according to claim 8 or 9, **characterized in that** the at least one cleaning element (32, 32') comprises a nozzle and/or a brush.

11. A cleaning station for cleaning a rail vehicle (3), comprising
- a travel path, in particular a track (2), and
- a cleaning apparatus (4) according to at least one of claims 1 to 10, which is at least partially arranged to be stationary.

12. A cleaning station according to claim 11, **characterized in that** the at least one detection device (10, 10') and/or the at least one cleaning device (11, 11') and/or the at least one inspection device (12, 12') are arranged one after the other and/or laterally next to the travel path in a process direction (D).

13. A cleaning station according to claim 11 or 12, **characterized in that** a first detection device (10) and/or a first cleaning device (11) and/or a first inspection device (12) is arranged on a first side (S₁) next to the travel path, and
**that** a second detection device (10') and/or a second cleaning device (11') and/or a second inspection device (12') is arranged on a second side (S₂) next to the travel path.

14. A method for cleaning a rail vehicle, comprising the steps of:
- providing a cleaning station (1) according to at least one of claims 11 to 13,
- moving the rail vehicle along the travel path,
- detecting soiling (G) on the rail vehicle by means of the at least one detection device (10, 10'),
wherein a travel motion control device (14) is provided for controlling the travel motion of the rail vehicle to be cleaned depending on the detected soiling (G),
- controlling the at least one cleaning device (11, 11') in dependence on the detected soiling (G) by means of the control device (13), and
- cleaning of the rail vehicle by means of the at least one cleaning device (11, 11').

## Revendications

1. Dispositif de nettoyage pour nettoyer un véhicule ferroviaire, comprenant
- au moins un dispositif de détection (10, 10') pour détecter des salissures (G) sur un véhicule ferroviaire à nettoyer,
- au moins un dispositif de nettoyage (11, 11') pour nettoyer le véhicule ferroviaire avec
- au moins un élément de nettoyage (32, 32'), et
- au moins un robot multi-axes (26, 26') pour positionner ledit au moins un élément de nettoyage (32, 32') par rapport au véhicule ferroviaire,
- un dispositif de commande (13) pour commander ledit au moins un dispositif de nettoyage (11, 11') en fonction des salissures (G) détectées,
**caractérisé**
**par** un dispositif de commande du mouvement de déplacement (14) pour commander le mouvement de déplacement du véhicule ferroviaire à nettoyer en fonction des salissures (G) détectées.

2. Dispositif de nettoyage selon la revendication 1, **caractérisé par** au moins un dispositif de vérification (12, 12') pour vérifier le véhicule ferroviaire nettoyé.

3. Dispositif de nettoyage selon la revendication 1 ou 2, **caractérisé en ce que** ledit au moins un dispositif de détection (10, 10') et/ou ledit au moins un dispositif de vérification (12, 12') comprend respectivement au moins une caméra numérique (24, 24', 25, 25', 43, 43', 44, 44').

4. Dispositif de nettoyage selon au moins l'une quelconque des revendications précédentes, **caractérisé en ce**
**que** ledit au moins un dispositif de détection (10, 10') et/ou ledit au moins un dispositif de nettoyage (11, 11') et/ou ledit au moins un dispositif de vérification (12, 12') sont disposés l'un après l'autre dans une direction de processus (D).

5. Dispositif de nettoyage selon au moins l'une quelconque des revendications précédentes, **caractérisé en ce**
**que** ledit au moins un dispositif de nettoyage (28) comprend au moins un support (47) sur lequel est disposé ledit au moins un robot multi-axes (26).

6. Dispositif de nettoyage selon au moins l'une quelconque des revendications précédentes, **caractérisé en ce**
**que** ledit au moins un robot multi-axes (26, 26') comprend au moins trois, en particulier au moins quatre, et en particulier au moins cinq axes de déplacement (Bi à B₆).

7. Dispositif de nettoyage selon au moins l'une quelconque des revendications précédentes, **caractérisé en ce**
**que** ledit au moins un robot multi-axes (26, 26') comprend au moins un capteur pour détecter les salissures (G).

8. Dispositif de nettoyage selon au moins l'une quelconque des revendications précédentes, **caractérisé en ce**
**que** ledit au moins un dispositif de nettoyage (11, 11') comprend au moins une unité de mise à disposition (28, 28') pour la mise à disposition d'un milieu de nettoyage, en particulier pour la mise à disposition de neige carbonique (P).

9. Dispositif de nettoyage selon la revendication 8, **caractérisé en ce que** l'unité de mise à disposition (28, 28') comprend un générateur de neige carbonique (37, 37') et/ou un réservoir de neige carbonique (38, 38').

10. Dispositif de nettoyage selon la revendication 8 ou 9, **caractérisé en ce que** ledit au moins un élément de nettoyage (32, 32') comprend une buse et/ou une brosse.

11. Station de nettoyage pour nettoyer un véhicule ferroviaire (3), comprenant
- une voie de déplacement, en particulier une voie ferrée (2), et
- un dispositif de nettoyage (4) selon au moins l'une quelconque des revendications 1 à 10, qui est disposé au moins partiellement de manière stationnaire.

12. Station de nettoyage selon la revendication 11, **caractérisée en ce que** ledit au moins un dispositif de détection (10, 10') et/ou ledit au moins un dispositif de nettoyage (11, 11') et/ou ledit au moins un dispositif de vérification (12, 12') sont disposés l'un après l'autre dans une direction de processus (D) et/ou latéralement à côté de la voie de déplacement.

13. Station de nettoyage selon la revendication 11 ou 12, **caractérisée en ce**
**qu'un** premier dispositif de détection (10) et/ou un premier dispositif de nettoyage (11) et/ou un premier dispositif de vérification (12) est disposé sur un premier côté (S₁) à côté de la voie de déplacement, et **qu'**un deuxième dispositif de détection (10') et/ou un deuxième dispositif de nettoyage (11') et/ou un deuxième dispositif de vérification (12') est disposé sur un deuxième côté (S₂) à côté de la voie de déplacement.

14. Procédé de nettoyage d'un véhicule ferroviaire, comprenant les étapes suivantes :
- mise à disposition d'une station de nettoyage (1) selon au moins l'une quelconque des revendications 11 à 13,
- déplacement du véhicule ferroviaire le long de la voie de déplacement,
- détection de salissures (G) sur le véhicule ferroviaire au moyen dudit au moins un dispositif de détection (10, 10'),
dans lequel un dispositif de commande du mouvement de déplacement (14) est prévu pour commander le mouvement de déplacement du véhicule ferroviaire à nettoyer en fonction des salissures (G) détectées,
- commande de l'au moins un dispositif de nettoyage (11, 11') en fonction des salissures (G) détectées au moyen du dispositif de commande (13), et
- nettoyage du véhicule ferroviaire au moyen dudit au moins un dispositif de nettoyage (11, 11').
